# EUROPÄISCHE PATENTSCHRIFT

(11) **EP 2 044 595 B1**
(45) Veröffentlichungstag und Bekanntmachung des Hinweises auf die Patenterteilung: **29.06.2011**
(21) Anmeldenummer: 07786220.9
(22) Anmeldetag: 20.07.2007
(51) Int. Cl.: G21C 19/105, G21C 19/20

(54) **BRENNELEMENT-LADEMASCHINE UND VERFAHREN ZUR HANDHABUNG VON BRENNELEMENTEN**
FUEL ELEMENT LOADING MACHINE AND METHOD FOR HANDLING FUEL ELEMENTS
MACHINE DE CHARGEMENT D'ÉLÉMENTS COMBUSTIBLES ET PROCÉDÉ DE TRAITEMENT D'ÉLÉMENTS COMBUSTIBLES

(30) Priorität: 24.07.2006 DE 102006034680
(43) Veröffentlichungstag der Anmeldung: 08.04.2009
(73) Patentinhaber: Areva NP GmbH, 91050 Erlangen (DE)
(72) Erfinder: EISNER, Jürgen, 63477 Maintal (DE); WEIMER, Holger, 90617 Puschendorf (DE); BOTT, Edgar, 63755 Alzenau (DE)
(74) Vertreter: Hafner-Tergau-Walkenhorst
(86) Internationale Anmeldenummer: PCT/EP2007/006471
(87) Internationale Veröffentlichungsnummer: WO 2008/012034

(56) Entgegenhaltungen:
- EP-A- 0 143 595
- EP-A- 0 147 944
- EP-A- 0 434 291
- FR-A- 2 752 639
- JP-A- 8 075 893
- LU-A1- 45 804
- US-A- 4 929 413
- US-A- 5 104 612
- US-A- 5 586 158
- US-A- 5 887 041
- US-A- 5 912 934

## Beschreibung

Die Erfindung betrifft eine Brennelement-Lademaschine mit einer einen Führungsmast und einen teleskopartig aus dem Führungsmast ausfahrbaren Brenneiementgreifer umfassenden Hebevorrichtung, wobei der Brennelementgreifer am unteren Ende eine Greifvorrichtung aufweist, und wobei der Führungsmast an einer in einer horizontalen Ebene beweglichen Laufkatze verankert ist.

Brennelement-Lademaschinen, kurz Lademaschinen, sind bevorzugt im Sicherheitsbehälter oder im Brennelementgebäude einer kerntechnischen Anlage angeordnet, beispielsweise in einer Druckwasser- oder einer Siedewasser-Reaktoranlage. Mit Hilfe der Lademaschine werden üblicherweise Brennelemente zwischen dem Reaktor der Anlage und einem Brennelement-Lagerbecken transportiert. Bei einem Brennelementwechsel werden die verbrauchten Brennelemente aus dem Reaktor in das Lagerbecken transportiert, und gleichzeitig wird der Reaktor mit neuen Brennelementen bestückt. Mit der Lademaschine können auch Brennelemente innerhalb des Reaktors umgesetzt oder manipuliert werden. Der Ablauf derartiger Handhabungsvorgänge wird in der Regel nach einem vorab festgelegten Schrittfolgeplan durchgeführt, protokolliert und mehrfach kontrolliert.

Die Lademaschine ist in der Regel als eine kranartige Hebevorrichtung ausgestaltet, die an einer entlang einer Laufbrücke bewegbaren Laufkatze befestigt ist. Die Laufbrücke selbst ist üblicherweise in einer zu ihrer Längsrichtung senkrechten, horizontalen Richtung entlang von Schienen bewegbar, so dass die Laufkatze mit der Hebevorrichtung innerhalb eines durch die Abmessungen der Laufbrücke und der Ausdehnung des Schienenweges vorgegebenen Aktionsbereiches in einer geodätisch horizontalen Ebene beliebig positionierbar ist. Die Hebevorrichtung umfasst einen an seinem oberen Ende an der Laufkatze verankerten Führungsmast und einen teleskopartig aus dem Führungsmast nach unten ausfahrbaren Brennelementgreifer. Für die Durchführung des eigentlichen Greifvorganges weist der Brennelementgreifer an seinem unteren Ende eine Greifvorrichtung mit einer Anzahl von Greifklinken auf. Insbesondere bei Druckwasserreaktoren kann der Brennelementgreifer auch als sogenannter Doppelgreifer ausgebildet sein, mit dem gleichzeitig oder alternativ zur Handhabung des gesamten Brennelementes ein im Brennelement angeordneter Steuerstab oder ein in die Steuerstabführungsrohre eingebrachter Drosselkörper manipuliert und bewegt werden kann. Zudem kann zwischen dem Brennelementgreifer und dem Führungsmast eine sogenannte Zentrierglocke als weiteres Teleskopelement vorgesehen sein.

Zur Aufnahme und Halterung der Brennelemente ist üblicherweise ein im Lagerbecken angeordnetes Lagergestell vorgesehen. Innerhalb eines derartigen Lagergestells sind die eine längliche Form aufweisenden Brennelemente jeweils in einer ihnen aktuell zugewiesenen Betriebs- oder Lagerposition angeordnet. Die Brennelemente sind dabei in geodätisch vertikaler Richtung orientiert, sprich aufrecht stehend positioniert. Auch im Reaktorbecken eines Druckwasserreaktors stehen die Brennelemente dicht gepackt und in aufrechter Position nebeneinander, in der Regel allerdings ohne obere Führung oder dergleichen. Bei vertikaler Blickrichtung von oben bilden die Brennelemente somit ein schachbrettartiges oder gitterartiges Muster, wobei die Lage jedes der Brennelemente durch zwei Koordinaten in einem zweidimensionalen, horizontal orientierten Koordinatensystem charakterisiert werden kann. Ein besonders zweckmäßiges Koordinatensystem weist dabei eine in Ausdehnungsrichtung der Laufbrücke und eine senkrecht dazu, das heißt in Richtung des Schienenweges für die Laufbrücke, orientierte Koordinatenachse auf.

Soll nun beispielsweise für einen Brennelementwechsel ein im Reaktorbecken des Reaktors positioniertes Brennelement mittels der Lademaschine aufgenommen und zum Lagerbecken transportiert werden, so wird die Laufkatze mit der an ihr angeordneten Hebevorrichtung zunächst zu einer der Lage des Brennelementes entsprechenden Referenzposition gefahren. Die dazu erforderlichen Positionsdaten des Brennelementes sind gewöhnlich in einem Leitstand der Lademaschine hinterlegt. Die aktuelle Position von Laufkatze und/oder Laufbrücke wird mittels Wegmessung erfasst und mit der jeweiligen Absolutwertvorgabe verglichen, so dass dieser erste Schritt des Aufnahme- und Transportvorganges durch entsprechende Ansteuerung der Antriebseinheiten von Laufkatze und Laufbrücke automatisiert erfolgen kann. Anschließend wird der Brennelementgreifer nach unten ausgefahren, um mit der an seinem unteren Ende angeordneten Greifvorrichtung das Brennelement zu greifen. Dabei kann es jedoch insbesondere infolge schief im Reaktorbecken oder im Lagerbecken stehender Brennelemente zu zeitlichen Verzögerungen kommen.

Zwar sind am Brennelementgreifer üblicherweise Greifklinken und an der Zentrierglocke üblicherweise Zentrierdornen angeordnet, die ein geringfügig schief stehendes Brennelement in die für ein Einrasten der Brennelementgreifer Greifklinken erforderliche Position rücken, jedoch ist bei Lageabweichungen, die die konstruktionsbedingt zulässigen Toleranzen überschreiten, in der Regel eine manuelle Nachpositionierung der Hebevorrichtung, das heißt eine erneute Ausrichtung von Laufkatze und/oder Laufbrücke erforderlich. Da die Zentrier- und Greifvorgänge aus strahlentechnischen Gründen normalerweise mehrere Meter unter der Wasseroberfläche des Reaktor- oder Lagerbeckens stattfinden und der einsehbare Bereich durch den Führungsmast und die Zentrierglocke stark eingeschränkt ist, ist eine visuelle Überwachung von der Lademaschine oder vom Beckenrand aus erschwert oder sogar gänzlich unmöglich. Damit bleibt nur ein vergleichsweise aufwendiges Nachpositionieren nach dem Prinzip "Trial and Error". Da bei einer derartigen Vorgehensweise Handhabungsfehler, wie beispielsweise das Greifen und Umsetzen eines "falschen" Brennelementes, dessen Kennung nicht mit der im Schrittfolgeplan festgelegten Kennung übereinstimmt, nicht vollkommen ausgeschlossen sind, ist zudem eine nachträgliche Kontrolle der neuen Beladung erforderlich.

Zur Zeit entstehen während dem Be- und Endladen beim turnusgemäßen Brennelementwechsel, bei dem typischerweise ungefähr 400 Fahr- und Umlagerungsvorgänge durchgeführt werden, aufgrund der beschriebenen Handhabungsprobleme Verzugszeiten von bis zu 10 Stunden. Beim Brennelementwechsel ist der Reaktor abgeschaltet. Um den Produktionsausfall an erzeugter Energie während des Brennelementwechsels möglichst gering zu halten, ist man bestrebt, den Brennelementwechsel in einer möglichst kurzen Zeitspanne durchzuführen.

Eine Brennelement-Lademaschine gemäß dem Oberbegriff des Anspruchs 1 ist aus der Offenlegungsschrift LU 45 804 A1 bekannt. Sie umfasst eine am Brennelementgreifer angeordnete Videokamera zur Beobachtung der Greif- und Handhabungsvorgänge. Zum Schutz der Videokamera vor der von den Brennelementen ausgehenden Strahlung ist zwischen dem Objektiv der Kamera und dem unteren Ende des Brennelementgreifers ein Endoskop angeordnet. Ferner sind Leuchtmittel zur Ausleuchtung des von der Kamera erfassten Bildbereiches vorgesehen. Die Videokamera, das Endoskop und die Leuchtmittel sind von einem Gehäuse in der Art eines Schutz- und Führungsrohres umgeben.

Der vorliegenden Erfindung liegt die Aufgabe zugrunde, eine Brennelement-Lademaschine der oben genannten Art für einen Einsatz in einem Druckwasserreaktor derart weiterzuentwickeln, dass auch bei einer Ausgestaltung des Brennelementgreifers als Doppelgreifer mit einem zusätzlichen Steuerstabgreifer die Videokamera nicht durch die von den Brennelementen oder den Steuerstäben freigegebene Strahlendosis beschädigt werden kann.

Diese Aufgabe wird erfindungsgemäß gelöst durch die Merkmale des Anspruchs 1.

Die Erfindung geht dabei von der Überlegung aus, dass die Handhabung von Brennelementen mittels der Brennelement-Lademaschine möglichst zeitnah und möglichst kontinuierlich überwacht werden sollte, damit Handhabungsfehler und umständliche Positionskorrekturen nach dem "Trial and Error"-Prinzip von vornherein vermieden sind oder zumindest auf ein Minimum beschränkt werden. Neben dem von der Lademaschine selbst bereitgestellten Zustandsanzeigen und/oder beispielsweise von Lastaufnehmem oder dergleichen gelieferten Meßwerten sollte zweckmäßigerweise auch noch eine direkte visuelle Überwachung des Greifbereiches vorgesehen sein. Zu diesem Zweck ist nach dem nunmehr vorgesehenen Konzept eine auf den Positionierungsvorgang des Greifersystems gerichtete Videokamera vorgesehen, deren Bild- oder Videosignale den aktuellen Zustand im Reaktorkern oder im Lagerbecken wiedergeben. Die Videosignale werden in analoger oder digitaler Form an einen Leitstand übermittelt. Der Leitstand kann insbesondere auch auf der Reaktorbedienungsebene angeordnet sein, so dass das Bedien- und Überwachungspersonal keiner nennenswerten Strahlenbelastung ausgesetzt ist. Die Videosignale können z.B. auch für eine spätere Auswertung oder für Dokumentationszwecke auf einem Magnetband oder auf einem Massenspeicher einer elektronischen Datenverarbeitungsanlage gespeichert bzw. archiviert werden. Um eine für die Bildauswertung störende Lichtbrechung an der Wasseroberfläche zu vermeiden, sollte überdies die Videokamera unterhalb der Wasseroberfläche angeordnet sein. Da für die sichere Handhabung der Brennelemente und die exakte Ausrichtung von Laufkatze und Laufbrücke vor allem die Position des Brennelementgreifers relativ zum oberen Ende des jeweiligen Brennelementes interessiert, wobei für die Positionsbestimmung das eingangs erwähnte zweidimensionale, horizontale Koordinatensystem zugrunde gelegt wird, sollte für eine schnelle und aussagekräftige Erfassung von Abweichungen die Blickrichtung der Kamera im Wesentlichen nach unten auf das jeweils ausgewählte Brennelement gerichtet sein. Der von der Kamera einsehbare Bereich sollte dabei durch die Hebevorrichtung selbst und insbesondere durch eine gegebenenfalls vorhandene Zentrierglocke möglichst wenig beeinträchtigt sein. Daher sollte die Kamera zweckmäßigerweise direkt in die nach unten ausfahrbaren Teleskopelemente der Hebevorrichtung integriert sein. Für einen stets gleichbleibenden Abstand zum Greifbereich ist die Videokamera vorzugsweise am Brennelementgreifer angeordnet. Damit wird ein häufiges Nachfokussieren der Videokamera vermieden.

Für die Ermittlung von notwendigen Positionskorrekturen infolge schief stehender Brennelemente reicht es im Prinzip aus, dass die Blickrichtung der Videokamera im Wesentlichen senkrecht nach unten gerichtet ist. Vorteilhafterweise erfasst das Blickfeld der Videokamera dabei aber auch zumindest teilweise die Greifklinken der Greifvorrichtung und/oder die Zentrierstifte der Zentrierglocke. Damit kann zum einen unmittelbar die Funktionstüchtigkeit der am Brennelementgreifer angeordneten Greifklinken bzw. der an der Zentrierglocke angeordneten Zentrierdornen oder -stifte überwacht werden. Zum anderen lassen sich auf diese Weise auch etwaige Fremdkörper im Greifbereich, die den Handhabungsvorgang behindern könnten, schnell erfassen.

In einer vorteilhaften Weiterbildung umfasst die Videokamera eine von einer Aufnahmeoptik räumlich getrennte Wandlereinheit. Die Wandlereinheit, die unter Umständen strahlungsempfindliche elektronische Baugruppen aufweist, ist vorzugsweise am oberen Ende des Brennelementgreifers angeordnet während die Aufnahmeoptik vorzugsweise am unteren Teil des Brennelementgreifers angeordnet ist. Ferner ist zwischen dem Objektiv der Videokamera und dem unteren Ende des Brennelementgreifers ein Endoskop angeordnet. Bei dieser Ausführung ist es möglich, den Abstand der Videokamera oder zumindest ihrer strahlungsempfindlichen Bauteile zu dem vergleichsweise stark radioaktiv strahlenden Brennelement relativ groß zu halten und dennoch durch das Endoskop, das gewissermaßen das Objektiv der Kamera nach unten hin verlängert, einen vorteilhaften Bildausschnitt zu erzielen.

Vorteilhafterweise ist das Endoskop als starres Endoskop, insbesondere als Glasendoskop mit einer Linsenoptik, ausgeführt. Ein derartiges Glasendoskop ist besonders strahlenresistent und muss daher nur vergleichsweise selten ausgewechselt werden. Alternativ kann aber auch ein vergleichsweise kostengünstiges flexibles Endoskop mit einem flexiblen Lichtwellenleiter, z. B. aus einem Glasfaserwerkstoff oder dergleichen, oder eine entsprechend kleine Röhrenkamera verwendet werden.

Weiterhin sind am Brennelementgreifer Leuchtmittel zur Ausleuchtung des die Zentrier- und Greifvorrichtung umfassenden Greifbereiches angeordnet. Damit lässt sich auch bei weniger lichtstarken Videokameras und/oder mehrere Meter unter dem Wasserspiegel des Reaktorbeckens ein klares und deutliches Videobild erzielen. Die Leuchtmittel können vorteilhafterweise auch in das Endoskop integriert sein.

Die Videokamera und das Endoskop und gegebenenfalls die Leuchtmittel sind von einem Schutz- und Führungsrohr umgeben, und so vor äußerer mechanischer Einwirkung, z.B. durch etwaige Kollisionen mit dem Brennelement-Lagergestell oder sonstigen Einbauten im Reaktor- oder Lagerbecken weitestgehend geschützt. In einer vorteilhaften und platzsparenden Ausführung, die auf die beengten Raumverhältnisse innerhalb der teleskopartig ausfahrbaren Hebevorrichtung abgestimmt ist, ist das Schutz- und Führungsrohr an der Außenseite des Brennelementgreifers fixiert. Bei einem Brennelementgreifer mit rechteckigem Querschnitt kann das Schutz- und Führungsrohr insbesondere in einem der Eckbereiche angeordnet sein. Beim Einfahren des Brennelementgreifers in den als Hohlkörper ausgestalteten Führungsmast wird das Schutzrohr also mit in den Führungsmast hineingezogen. Zum Schutz der Videokamera und des Endoskops sind selbige erfindungsgemäß in einem an beiden Enden wasserdicht verschlossenen Innenrohr untergebracht, das innerhalb des Schutz- und Führungsrohres und der Innendurchmesser des Schutz- und Führungsrohres sind zweckmäßigerweise derart passgenau aufeinander abgestimmt, dass sich das Innenrohr bei der Montage des Gesamtsystems vom vergleichsweise leicht zugänglichen oberen Ende des Schutz- und Führungsrohres her in dieses einführen und dann in selbstzentrierender Weise in seine Betriebsposition schieben lässt. Damit ist eine exakte Ausrichtung der Videokamera sichergestellt. Das Innenrohr lässt sich bei Bedarf, etwa zu Wartungszwecken, auch vergleichsweise leicht mitsamt der Videokamera und dem Endoskop auswechseln. Zur Fixierung des Innenrohrs in seiner Betriebsposition sind vorzugsweise vom oberen Ende des Schutz- und Führungsrohres her zugängliche Fixier- oder Klemmmittel vorhanden. Die Fixierung kann beispielsweise durch ein Zwischenstück von passender Länge erfolgen, das sich zwischen dem oberen Ende des Innenrohres und einer auf das Schutz- und Führungsrohr aufgesetzten und dort arretierten oberen Abschlusskappe erstreckt.

Zum Austausch des Kernbrennstoffs werden in der Regel die einzelnen Brennelemente jeweils als Ganzes ausgetauscht. Zur Handhabung von Brennelementen und Steuerstäben sowie von Drosselkörpern wird insbesondere bei Druckwasserreaktoren ein sogenannter Doppelgreifer eingesetzt. Dieser Doppelgreifer ist mit einem selbständig bedienbaren Steuerstabgreifer und einem selbständig bedienbaren Brennelementgreifer ausgestattet, so dass es möglich ist, sowohl einen Steuerstab als auch ein Brennelement für sich alleine zu transportieren und umzusetzen, als auch das Brennelement mit dem noch darin befindlichen Steuerstab gemeinsam zu handhaben. Üblicherweise ist der Steuerstabgreifer im Inneren des Brennelementgreifers geführt.

In zusätzlicher oder alternativer vorteilhafter Ausgestaltung kann zwischen dem Führungsmast und dem Brennelementgreifer eine ein weiteres Teleskopelement bildende Zentrierglocke vorgesehen sein.

Vorzugsweise umfasst der Leitstand der Lademaschine einen Anzeigemonitor zur Anzeige der von der Videokamera übermittelten Videosignale, so dass der Lademaschinenfahrer bei einer manuellen Steuerung der Lademaschine in Echtzeit ("Live") einen Einblick in den Greifbereich der Hebevorrichtung und in die darunter liegenden Brennelemente erhält und anhand dieser zusätzlichen visuellen Informationen eventuell notwendige Korrektureingriffe besonders zielgerichtet vornehmen kann. Anhand des Videobildes ist es auch möglich, ein am oberen Kopfbereich des jeweiligen Brennelementes angebrachtes Identifikationsmerkmal, beispielsweise eine Brennelement-Identifikationsnummer, noch vor dem Greifen des Brennelementes zu erfassen und mit der in einem Schrittfolgeplan notierten Vorgabe zu vergleichen. Damit kann bereits vor oder während des eigentlichen Beladevorganges eine Beladekontrolle erfolgen. Auf diese Weise kann die zeitaufwendige Kontrolle nach der Beladung entfallen und die Stillstandszeit des Kernreaktors beim Brennelementwechsel wird insgesamt erheblich verkürzt. Selbstverständlich kann anhand der Videodaten auch eine (redundante) Beladekontrolle nach dem Beladevorgang erfolgen.

Vorteilhafterweise umfasst der Leitstand der Lademaschine eine elektronische Datenverarbeitungsanlage, die für eine Auswertung und Verarbeitung der von der Videokamera übermittelten Videodaten ausgelegt und konfiguriert ist. Zweckmäßigerweise ist die Datenverarbeitungsanlage dazu mit einem Bildverarbeitungsmodul ausgestattet, das beispielsweise in Form eines auf dem Prozessor der Datenverarbeitungsanlage ablauffähigen Softwareprogrammes in einer Speichereinheit hinterlegt oder fest in die Datenverarbeitungsanlage einprogrammiert sein kann. Ein derartiges Softwareprogramm zur Bildverarbeitung oder Bildanalyse (Image Processing Software) wertet das Kamerabild vorteilhafterweise automatisch aus, erkennt dabei mögliche Positionsabweichungen der Lademaschine oder des jeweiligen Brennelementes und berechnet notwendige Korrekturen. Datenausgangsseitig ist das Bildverarbeitungsmodul vorzugsweise mit einem Steuermodul für die Laufkatze und/oder die Laufbrücke verbunden. Das Steuermodul rechnet die vom Bildverarbeitungsmodul ermittelten Korrekturanweisungen in Absolutkoordinaten um und übergibt diese an einen Stellwertgeber für die Antriebseinheiten der Lademaschine, so dass eine vollautomatische Steuerung oder Nachpositionierung derselben ermöglicht ist. Der Lademaschinenfahrer kann den automatisiert ablaufenden Beladevorgang auf einem Anzeigemonitor beobachten und bei Bedarf auf einen manuellen Betrieb umstellen.

In einer besonders vorteilhaften Ausführung umfasst das Datenverarbeitungsmodul ein Mustererkennungsmodul, mit dessen Hilfe die Erkennung und Identifizierung von am jeweiligen Brennelement angebrachten Identifikationsmerkmalen ebenfalls automatisiert erfolgen kann. Beispielsweise kann eine sogenannte OCR-Software (OCR = Optical Character Recognition) zum Einsatz kommen, um eine Brennelement-Identifikationsnummer oder eine entsprechende Barcode-Markierung oder dergleichen zu identifizieren. Dabei kommuniziert das Mustererkennungsmodul vorzugsweise mit dem Steuermodul und/oder mit einem Verwaltungsmodul für die Brennelemente, welches auch zu einer weiteren, externen Datenverarbeitungsanlage gehören kann. Handhabungsfehler wie z.B. das Umsetzen eines Brennelementes, dessen Brennelement-Identifikationsnummer nicht mit der Vorgabe des Schrittfolgeplans übereinstimmt, werden automatisch erkannt und dem Bedienpersonal der Lademaschine angezeigt. In einem derartigen Fall kann auch der Antrieb der Lademaschine oder des Brennelementgreifers automatisch blockiert und der Betriebsablauf unterbrochen werden, noch bevor ein "falsches" Brennelement gegriffen bzw. bewegt wurde.

Die mit der Erfindung erzielten Vorteile bestehen insbesondere darin, dass durch die Integration eines Kamerasystems in die vorhandene Struktur des Brennelementgreifers einer Brennelement-Lademaschine eine visuelle "Online"-Überwachung der Handhabungs- und Beladungsvorgänge im Reaktor- oder Lagerbecken einer kerntechnischen Anlage ermöglicht wird. Die verbesserte Handhabung der Brennelemente gewährleistet eine erhöhte Betriebssicherheit. Beladefehler und Handhabungszeiten werden minimiert. Die beschriebene Ausführung, bei der die Videokamera zusammen mit einem Endoskop in einem Schutzrohr integriert ist, ist ausgesprochen kompakt und eignet sich auch zur Nachrüstung bestehender Antagen. Die Kameraeinheit läßt sich bei Bedarf auch leicht auswechseln. Bei neuentwickelten Lademaschinen kann aufgrund der verbesserten Handhabungsmöglichkeiten möglicherweise auf eine bislang übliche Zentrierglocke verzichtet werden, wodurch sich die Greiferkonstruktion vereinfacht.

Die von der Videokamera übermittelten Bilddaten können schließlich auch von einem elektronischen Bildverarbeitungs- und/oder Mustererkennungssystem verarbeitet und zur Steuerung oder Regelung der Lademaschine herangezogen werden, womit eine vollständig automatisierte Fahrweise der Lademaschine ermöglicht ist.

Darüber hinaus kann das Kamerasystem auch ganz allgemein bei Inspektions-, Wartungs- und Bergungsarbeiten, z. B. bei der Beobachtung von Einbauten im Reaktor- oder Lagerbecken der bei der Lokalisierung und Beseitigung von Fremdkörpern, vorteilhaft zum Einsatz kommen.

Beispielsweise können je nach Reaktortyp und Anwendungsfall anhand der übertragenen Videobilder auch Schaden am Kopf von Brennelementen, Steuerelementen,

Steuerstäben oder Drosselkörpern frühzeitig erkannt werden, so dass sich gezielt geeignete Gegenmaßnahme treffen lassen, welche ggf. wiederum durch die visuellen Informationen des Kamerasystems unterstützt werden.

Ein Ausführungsbeispiel der Erfindung wird anhand einer Zeichnung näher erläutert. Darin zeigen:
- Fig. 1: Eine schematische ausschnittsweise Darstellung einer Brennelement- Lademaschine mit einer in einen Brennelementgreifer integrierten Videokamera, die datenausgangsseitig mit einem Anzeigemonitor und mit einer elektronischen Datenverarbeitungsanlage verbunden ist, und
- Fig. 2: ein Schutz- und Führungsrohr zur geschützten Unterbringung der Videokamera.

Gleiche Teile sind in allen Figuren mit denselben Bezugszeichen versehen.

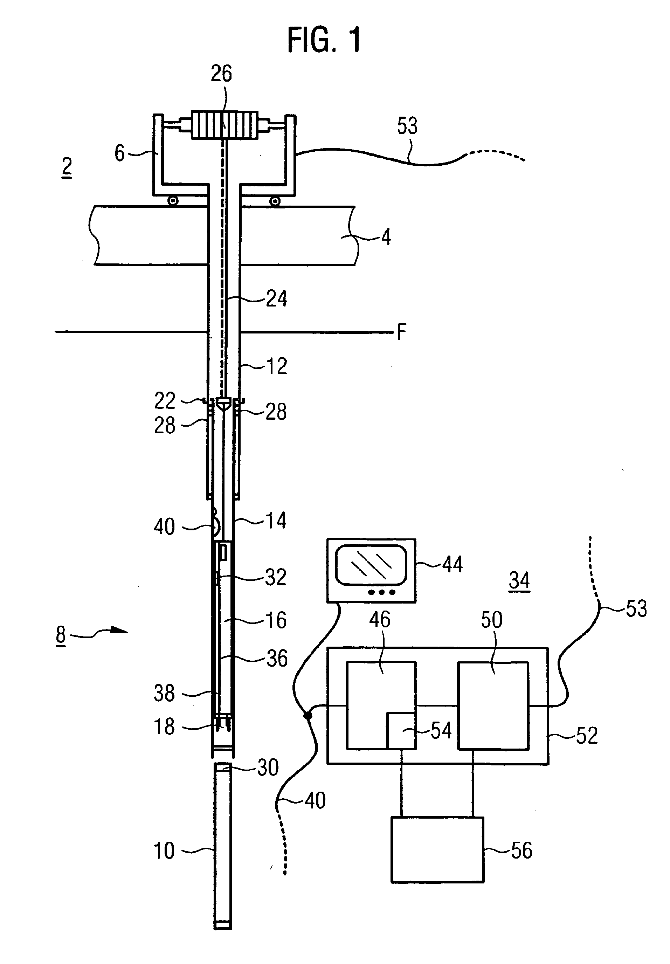

Fig. 1 zeigt in schematischer Darstellung einen Ausschnitt aus einer Brennelement-Lademaschine 2 (kurz: Lademaschine). Die Lademaschine 2 weist eine verfahrbare Laufbrücke 4 auf, die in einem hier nicht dargestellten Reaktorgebäude einer kerntechnischen Anlage installiert ist. Die Laufbrücke 4 ist mittels einer Antriebsvorrichtung senkrecht zur Figurenebene bewegbar. Auf der Laufbrücke 4 befindet sich eine Laufkatze 6, die mittels einer weiteren Antriebsvorrichtung geodätisch horizontal im rechten Winkel zur Laufbrücke 4 verfahrbar ist. Die beiden Fahrtrichtungen legen dabei ein rechtwinkliges, horizontales Koordinatensystem fest, in dem die aktuelle Position der Laufkatze 6 durch zwei Koordinaten definiert ist.

Die Laufkatze 6 weist an ihrer Unterseite eine teleskopartig nach unten ausfahrbare Hebevorrichtung 8 für Brennelemente 10 auf. Als Teleskopelemente sind dabei ein an der Laufkatze 6 verankerter Führungsmast 12, eine Zentrierglocke 14 und ein Doppelgreifer, bestehend aus einem Brennelementgreifer 16 und einem Steuerstabgreifer, vorgesehen. Am unteren Ende des Brennelementgreifers 16 ist eine Greifvorrichtung 18 zum Greifen eines Brennelements 10 angeordnet. Außerdem ist im Inneren des Brennelementgreifers 16 ein hier nicht näher dargestellter Steuerstabgreifer geführt, der unabhängig von den weiteren Teleskopelementen nach oben oder nach unten verfahren werden kann, und der die Aufnahme oder Manipulation eines in ein Brennelement 10 eingebrachten Steuerelementes oder eines Drosselkörpers ermöglicht.

Bis auf den Steuerstabgreifer sind die Teleskopelemente bevorzugt als Hohlkörper mit einer quadratischen Querschnittsfläche ausgestaltet. Der Führungsmast 12, der auch eine runde Querschnittsfläche aufweisen kann, umgibt dabei die Zentrierglocke 14, diese wiederum den Brennelementgreifer 16, welcher schließlich den Steuerstabgreifer umgibt. Der Innenraum der Zentrierglocke 14 ist derart bemessen, dass der Brennelementgreifer 16 zusammen mit einem an ihm hängenden Brennelement 10 von der Zentrierglocke 14 aufgenommen werden kann. Im ausgefahrenen Zustand gemäß Fig. 1 sitzt die Zentrierglocke 14 auf einem unteren Anschlag 22 des Führungsmastes 12 auf. Der Brennelementgreifer 16 ist zur Aufnahme eines Steuerelementes in seinen Innenraum ausgelegt. Das Steuerelement besitzt in der Regel etwa die gleiche Länge wie das Brennelement 10.
Im Inneren der teleskopartigen Hebevorrichtung 8 verläuft ein Seilzug 24, mittels dessen die Teleskopelemente herabgelassen oder heraufgezogen werden können. Zum Herablassen der Teleskopelemente wird der Seilzug 24 nach unten ausgefahren, wobei die Teleskopelemente durch ihr Eigengewicht automatisch nach unten sinken. Zum Heraufziehen des Seilzugs 24 und der Teleskopelemente ist ein an der Laufkatze 6 angeordnetes Hubwerk 26 vorgesehen. Der Hubweg der Teleskopelemente nach oben und nach unten ist jeweils durch einen oberen und einen unteren Anschlag begrenzt. Zwischen dem Führungsmast 12 und der in seinem Inneren geführten Zentrierglocke 14 und gegebenenfalls auch zwischen der Zentrierglocke 14 und dem Brennelementgreifer 16 sind Führungsrollen 28 vorgesehen, die ein gegenseitiges Verkanten bzw. Steckenbleiben der Teleskopelemente verhindern.

Die Lademaschine 2 ist beispielsweise bei einem Druckwasserreaktor innerhalb des Sicherheitsbehälters oberhalb des eigentlichen Reaktors bzw. Reaktorkerns angeordnet und dient zum Versetzen von Brennelementen 10 oder von Kerneinbauten innerhalb des Reaktors und innerhalb eines nicht näher dargestellten Brennelement-Lagerbeckens für abgebrannte Brennelemente 10. Die Lademaschine 2 wird auch zum Transport von Brennelementen 10 zwischen dem Reaktor und dem Brennelement-Lagerbecken eingesetzt. Bei einem Brennelementwechsel ist der Sicherheitsbehälter zumindest zwischen dem Lagerbecken und dem Reaktor bis zu einer Füllstandshöhe F mit Wasser geflutet. Die Brennelemente 10 dürfen aus strahlungstechnischen Gründen nur unterhalb dieses Wasserpegels transportiert werden. Die Brennelemente 10 sind innerhalb des Reaktorbeckens oder des Lagerbeckens in einem hier nicht näher dargestellten Lagergestell in einer aufrecht stehenden Position gelagert, wobei der jeweils nach oben zeigende Brennelementkopf 30 derart ausgelegt und konstruiert ist, dass er sich mit der Greifvorrichtung 18 des Brennelementgreifers 16 sicher greifen läßt. Weiterhin ist am Kopf 30 des jeweiligen Brennelementes 10 eine Brennelement-Identifikationsnummer aufgeprägt, anhand derer sich das Brennelement 10 eindeutig identifizieren läßt.

Jedem Brennelement 10 ist innerhalb des Lagergestells eine feste Referenzposition zugeordnet, die sich in dem bereits erwähnten horizontalen Koordinatensystem durch zwei Koordinaten beschreiben läßt. Allerdings können einzelne Brennelemente 10 schief im Lagergestell stehen, sei es, weil das jeweilige Brennelement 10 bereits ursprünglich schief in das Lagergestell abgesetzt wurde, oder weil ein derartiger Schiefstand sich infolge einer betriebsbedingten Erosion des Brennelementes 10 im Laufe der Zeit ergeben hat. Das heißt, die tatsächliche aktuelle Position eines Brennelementes 10 kann von der festgelegten Referenzposition mehr oder weniger stark abweichen.

Die Lademaschine 2 ist vorliegend spezifisch dafür ausgelegt, auch unter derartig erschwerten Bedingungen im Rahmen einer weitestgehend oder vollständig automatisierten Fahrweise ein sicheres Greifen eines Brennelementes 10 zu gewährleisten. Zu diesem Zweck ist eine Videokamera 32 in die Hebevorrichtung 8 integriert, die in Echtzeit Videobilder aus dem Reaktorbecken oder dem Lagerbecken an einen Leitstand 34 für die Lademaschine 2 überträgt. Die Videokamera 32 ist zum Schutz vor mechanischen Einwirkungen und ggf. zur Abschirmung radioaktiver Strahlung in einem Schutz- und Führungsrohr 36 untergebracht, das an der Außenseite des Brennelementgreifers 16, das heißt zwischen dem Brennelementgreifer 16 und der Zentrierglocke 14, fest montiert ist. Die Blickrichtung der Videokamera 32 ist im Wesentlichen vertikal nach unten gerichtet, so dass die durch die Stellung der Laufbrücke 4 und der Laufkatze 6 veränderbare horizontale Position des Brennelementgreifers 16 relativ zu dem darunterliegenden Lagergestell bzw. zu den im Reaktor- oder Lagerbecken gelagerten Brennelementen 10 anhand des Videobildes besonders präzise erfassbar ist. Das Schutz - und Führungsrohr 36 ist im Wesentlichen parallel zur Längsausdehnung des Brennelementgreifers 16 ausgerichtet, wobei das untere Ende des Schutz - und Führungsrohres 36 knapp oberhalb der Greifvorrichtung 18 liegt. Nach oben hin erstreckt sich das Schutzrohr 36 bis zum oberen Ende des Brennelementgreifers. Für eine gute Übersicht über den Greifbereich in der Umgebung der Greifvorrichtung 18 kann das Schutzrohr 36 (ggf. auch nur in seinem unteren Abschnitt) leicht gegenüber der Vertikalen geneigt sein.

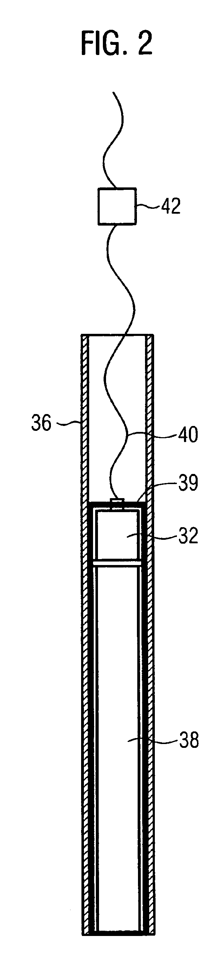

Fig. 2 zeigt im Detail einen Längsschnitt durch das Schutz - und Führungsrohr 36 mit der Videokamera 32. Für einen besonders wirksamen Schutz vor radioaktiver Strahlung, die unter Umständen die Funktionstüchtigkeit der Videokamera 32 beeinträchtigen könnte, ist die Videokamera 32 relativ weit oben im Schutz - und Führungsrohr 36 angeordnet, so dass auch während eines Greifvorganges ein zum Schutz der Videokamera 32 zweckmäßiger Abstand zwischen dieser und dem jeweiligen Brennelement 10 eingehalten wird. Um dennoch eine gute, von den Wänden des Schutz - und Führungsrohres 36 nicht behinderte Sicht nach unten zu ermöglichen, ist zwischen dem Objektiv der Videokamera 32 und dem unteren Ende des Schutzrohres 36 ein als starres Linsenendoskop ausgeführtes Endoskop 38 vorgesehen. Weiterhin sind zur Ausleuchtung des Greifbereiches hier nicht näher dargestellte Leuchtmittel vorgesehen, die in das Endoskop 38 oder in die Videokamera 32 integriert sein können. Für eine besonders einfache Auswechselbarkeit der gesamten Kameraeinheit sind die Videokamera 32 und das Endoskop 38 in einem metallischen Innenrohr 39 angeordnet, das sich bei Bedarf nach oben aus dem Schutz- und Führungsrohr 36 herausziehen und entnehmen lässt. Die Videokamera 32 ist in dem Innenrohr 39 wasserdicht gekapselt, wobei der Verschluss am unteren Ende durch das Endoskop 38 und am oberen Ende durch eine Verschlusskappe oder ähnliches bewirkt ist.

An die Videokamera 32 ist eine Kommunikationsleitung 40 angeschlossen, die einerseits zur elektrischen Versorgung und zur Übermittlung von Steuersignalen an die Videokamera 32 dient, und über die andererseits die Videosignale der Videokamera 32 über einen Adapter 42 zum Leitstand 34 der Lademaschine 2 übermittelt werden. Die Versorgung der Leuchtmittel kann ebenfalls über die Kommunikationsleitung 40 erfolgen, die im Inneren der Hebevorrichtung 8 geführt ist und sich dabei flexibel an den veränderlichen Hubweg der Teleskopelemente anpasst.

Der Leitstand 34 der Lademaschine 2 umfaßt, wie in Fig. 1 schematisch in einem Blockdiagramm dargestellt, einen Anzeigemonitor 44 für die von der Videokamera 32 übermittelten Videosignale und eine ein Bildverarbeitungsmodul 46, ein Speichermodul und ein Steuermodul 50 aufweisende elektronische Datenverarbeitungsanlage 52. Das Bildverarbeitungsmodul 46 ist wie der Anzeigemonitor 44 über die Kommunikationsleitung 40 eingangsseitig mit dem Videoausgang der Videokamera 32 verbunden und erkennt mittels einer sogenannten "Image Processing Software" automatisch die Position des Brennelementgreifers 16 relativ zu einem unter ihm befindlichen Brennelement 10. Die auf diese Weise gewonnenen Informationen werden in einem dem Bildverarbeitungsmodul 46 nachgeschalteten Steuermodul 50 in Steuersignale für die Lademaschine, insbesondere für die Laufbrücke 4 und die Laufkatze 6, umgesetzt. Ein in das Steuermodul 50 integrierter Stellwertgeber übernimmt dabei die Ansteuerung der jeweiligen Antriebseinheiten, wobei das durch die Bewegungsrichtungen von Laufbrücke 4 und Laufkatze 6 definierte Koordinatensystem zugrunde gelegt ist. Die Steuersignale werden über die Steuerleitung 53 vom Steuermodul 50 über die betrieblichen und sicherheitsgerichteten Einrichtungen an die Antriebseinheiten von Laufkatze 6 und Laufbrücke 4 übermittelt.

Das Bildverarbeitungsmodul 46 umfaßt weiterhin ein Mustererkennungsmodul 54 zur automatischen Erkennung und Identifizierung der am Kopf 30 des jeweiligen Brennelementes 10 angebrachten Brennelement-Identifikationsnummer. Das Bildverarbeitungsmodul steht in Verbindung mit einem Verwaltungsmodul 56 für Brennelemente 10, in dem in elektronischer Form ein Schrittfolgeplan für die von der Lademaschine 2 durchzuführenden Beladungs- und Transportoperationen hinterlegt ist. Um ein bestimmtes Brennelement 10 aus dem Reaktorbecken oder dem Lagerbecken zu entnehmen, oder auch um einen im Brennelement 10 angeordneten Steuerstab oder Drosselkörper zu entfernen, wird zunächst die Hebevorrichtung 8 mit Hilfe der Laufbrücke 4 und der Laufkatze 6 in eine Referenzposition oberhalb des zu entnehmenden Brennelementes 10 gebracht. Die zugehörigen Koordinaten sind in einer Datenbank des Verwaltungsmoduls 56 abgespeichert und werden vom Steuermodul 50 eingelesen und in entsprechende Steuersignale für die Laufbrücke 4 und die Laufkatze 6 umgewandelt. Nach Erreichen der Referenzposition wird das von der Videokamera 32 übermittelte Videobild von dem Bildverarbeitungsmodul 46 ausgewertet, wobei gegebenenfalls notwendige Korrektureingriffe, z. B. aufgrund eines schiefstehenden Brennelementes 10 oder aufgrund zulässiger Toleranzen, automatisch ermittelt und von dem Steuermodul 50 in Steuersignale umgesetzt werden. Infolge der von der Videokamera 32 und dem Bildverarbeitungsmodul 46 bereitgestellten Rückkopplung ist ein vollautomatisches Regelungssystem für die Lademaschine 2 realisiert, dass jedoch jederzeit vom Lademaschinenfahrer, der die Ladevorgänge auf dem Anzeigemonitor 44 beobachtet, unterbrochen werden kann.

Weiterhin überprüft das im Bildverarbeitungsmodul 46 integrierte Mustererkennungsmodul 54 automatisch die Brennelement-Identifikationsnummer des Brennelements 10 und vergleicht diese mit der Vorgabe des im Verwaltungsmodul 56 hinterlegten Schrittfolgeplans. Nur bei Übereinstimmung wird der Ladevorgang fortgesetzt, indem die teleskopartige Hebevorrichtung 8 vollständig nach unten abgesetzt wird, bis die Zentrierglocke 14 mit ihren Zentrierdornen in korrespondierenden Aufnahmen des Nachbar-Brennelementkopfes (hier nicht dargestellt) eingreift und damit eine endgültige "Zentrierung" der Greifvorrichtung relativ zum Brennelement 10 bewirkt. Schließlich wird auch der Brennelementgreifer 16 so weit abgesenkt, bis seine Greifklinken sich in den Kopf 30 des Brennelementes 10 einklinken können. Mit Hilfe des Hubwerks 26 wird das vom Brennelementgreifer 16 gehaltene Brennelement 10 nach oben gehoben und in die Zentrierglocke 14 eingefahren. In dieser Transportstellung ist das Brennelement 10 dann im Reaktorraum horizontal verfahrbar. Insbesondere kann das Brennelement 10 zu einem Brennelement-Lagerbecken transportiert und dort abgesetzt werden. Nach Beendigung des Transportvorganges wird entsprechend der neuen Belegung des Lagergestells mit Brennelementen 10 die Datenbank des Verwaltungsmoduls 56 aktualisiert.

### Bezugszeichenliste

- 2: Lademaschine
- 4: Laufbrücke
- 6: Laufkatze
- 8: Hebevorrichtung
- 10: Brennelement
- 12: Führungsmast
- 14: Zentrierglocke
- 16: Brennelementgreifer
- 18: Greifvorrichtung
- 22: Anschlag
- 24: Seilzug
- 26: Hubwerk
- 28: Führungsrollen
- 30: Brennelementkopf
- 32: Videokamera
- 34: Leitstand
- 36: Schutz- und Führungsrohr
- 38: Endoskop
- 39 I: Innenrohr
- 40: Kommunikationsleitung
- 42: Adapter
- 44: Anzeigemonitor
- 46: Bildverarbeitungsmodul
- 50: Steuermodul
- 52: Datenverarbeitungsanlage
- 53: Steuerleitung
- 54: Mustererkennungsmodul
- 56: Verwaltungsmodul

- F: Füllstandshöhe

## Patentansprüche

1. Brennelement-Lademaschine (2) mit einer einen Führungsmast (12) und einen teleskopartig aus dem Führungsmast (12) ausfahrbaren Brennelementgreifer (16) umfassenden Hebevorrichtung (8), wobei der Brennelementgreifer (16) am unteren Ende eine Greifvorrichtung (18) aufweist, wobei der Führungsmast (12) an einer in einer horizontalen Ebene beweglichen Laufkatze (6) verankert ist, wobei am Brennelementgreifer (16) eine datenseitig mit einem Leitstand (34) verbundene Videokamera (32) angeordnet ist, deren Blickrichtung nach unten gerichtet ist, wobei zwischen dem Objektiv der Videokamera (32) und dem unteren Ende des Brennelementgreifers (16) ein Endoskop (38) angeordnet ist, und wobei die Videokamera (32) und das Endoskop (38) sowie Leuchtmittel von einem Schutz- und Führungsrohr (36) umgeben sind, **dadurch gekennzeichnet, dass** der Brennelementgreifer (16) als Doppelgreifer mit einem in seinem Inneren geführten Steuerstabgreifer (20) ausgebildet ist, und dass die Videokamera (32), das Endoskop (38) und die Leuchtmittel in ein von oben in das Schutz- und Führungsrohr (36) einschiebbares, auswechselbares und wasserdicht verschlossenes Innenrohr (39) integriert sind.

2. Lademaschine (2) nach Anspruch 1, **dadurch gekennzeichnet, dass** das Blickfeld der Videokamera (32) zumindest teilweise einen die Greifvorrichtung (18) umfassenden Greifbereich erfasst.

3. Lademaschine (2) nach Anspruch 1 oder 2, **dadurch gekennzeichnet, dass** die Videokamera (32) eine von einer Aufnahmeoptik räumlich getrennte Wandlereinheit aufweist, wobei die Aufnahmeoptik am unteren Teil des Brennelementgreifers (16) und die Wandlereinheit in einem Abstand darüberliegend angeordnet ist.

4. Lademaschine (2) nach Anspruch 1, 2 oder 3, **dadurch gekennzeichnet, dass** das Endoskop (38) als starres Endoskop mit einer Linsenoptik ausgeführt ist.

5. Lademaschine (2) nach einem der Ansprüche 1 bis 4, **dadurch gekennzeichnet, dass** an der Hebevorrichtung (8), insbesondere am Brennelementgreifer (16), Leuchtmittel zur Ausleuchtung eines die Greifvorrichtung (18) umfassenden Greifbereiches befestigt sind.

6. Lademaschine (2) nach einem der Ansprüche 1 bis 5, **dadurch gekennzeichnet, dass** das Schutz- und Führungsrohr (36) an der Außenseite des Brennelementgreifers (16) angeordnet ist.

7. Lademaschine (2) nach einem der Ansprüche 1 bis 6, **dadurch gekennzeichnet, dass** zwischen dem Führungsmast (12) und dem Brennelementgreifer (16) eine ein Teleskopelement bildende Zentrierglocke (14) vorgesehen ist

8. Lademaschine (2) nach einem der Ansprüche 1 bis 7, **dadurch gekennzeichnet, dass** der Leitstand (34) einen Anzeigemonitor (44) zur Anzeige der von der Videokamera (32) übermittelten Videosignale umfasst.

9. Lademaschine (2) nach einem der Ansprüche 1 bis 8, **dadurch gekennzeichnet, dass** der Leitstand (34) eine elektronische Datenverarbeitungsanlage (52) umfasst.

10. Lademaschine (2) nach Anspruch 9, **dadurch** gekenntzeichnet, dass die Datenverarbeitungsanlage (52) mit einem Bildverarbeitungsmodul (46) ausgestattet ist

11. Lademaschine (2) nach Anspruch 10, **dadurch gekennzeichnet, dass** das Bildverarbeitungsmodul (46) datenausgangsseitig mit einem die Position der Laufkatze (6) und/oder der Laufbrücke (4) steuernden Steuermodul (50) verbunden ist

12. Lademaschine (2) nach Anspruch 10 oder 11, **dadurch gekennzeichnet, dass** das Bildverarbeitungsmodul (46) ein Mustererkennungsmodul (54) zur Erkennung und Identifikation von an einem Brennelement (10) angebrachten Identifikationsmerkmalen umfasst.

13. Lademaschine (2) nach einem der Ansprüche 10 bis 12, **dadurch gekennzeichnet, dass** das Bildverarbeitungsmodul (46) datenseitig mit einem Verwaltungsmodul (56) für Brennelemente verbunden ist.

## Claims

1. A fuel-element charging machine (2) having a lifting device (8) comprising a guiding pole (12) and a fuel-element gripper (16) telescoping out of the guiding pole (12), wherein the fuel-element gripper (16) includes at its lower end a gripper device (18), wherein the guiding pole (12) is anchored on a travelling trolley (6) movable in a horizontal plane, wherein a video camera (32) connected on the data side with a control station (34) and viewing in downward direction is arranged on the fuel-element gripper (16), wherein an endoscope (38) is arranged at the lower end of the fuel-element gripper (16), and wherein the video camera (32) and the endoscope (38) as well as illuminants are surrounded by a protective and guiding tube (36), **characterized in that** the fuel-element gripper (16) is designed as a double gripper with a control-rod gripper (20) guided in its inside, and **in that** the video camera (32), the endoscope (38) and the illuminants are integrated in an exchangeable and watertightly closed inner tube (39) which can be inserted from above into the protective and guiding tube (36).

2. The charging machine (2) of claim 1, **characterized in that** the field of view of the video camera (32) covers, at least in part, a gripping area comprising the gripper device (18).

3. The charging machine (2) of claim 1 or 2, **characterized in that** the video camera (32) includes a converter unit spatially separated from an optical system, wherein the optical system is arranged at the lower part of the fuel-element gripper (16) and the converter unit is arranged at a distance thereabove.

4. The charging machine (2) of claim 1, 2, or 3, **characterized in that** the endoscope (38) is designed as a rigid endoscope with a lens system.

5. The charging machine (2) of any of claims 1 to 4, **characterized in that** illuminants are fastened on the lifting device (8), in particular on the fuel-element gripper (16), for illuminating a gripping area comprising the gripper device (18).

6. The charging machine (2) of any of claims 1 to 5, **characterized in that** the protective and guiding tube (36) is arranged on the outside of the fuel-element gripper (16).

7. The charging machine (2) of any of claims 1 to 6, **characterized in that** a centering bell (14) forming a telescopic element is provided between the protective and guiding tube (36) and the fuel-element gripper (16).

8. The charging machine (2) of any of claims 1 to 7, **characterized in that** the control station (34) comprises a display monitor (44) for displaying the video signals transmitted by the video camera (32).

9. The charging machine (2) of any of claims 1 to 8, **characterized in that** the control station (34) comprises an electronic data processing equipment (52).

10. The charging machine (2) of claim 9, **characterized in that** the data processing equipment (52) is equipped with an image processing module (46).

11. The charging machine (2) of claim 10, **characterized in that** the image processing module (46) is connected on the data-output side with a control module (50) controlling the position of the travelling trolley (6) and/or the travelling bridge (4).

12. The charging machine (2) of claim 10 or 11, **characterized in that** the image processing module (46) comprises a pattern-recognition module (54) for recognizing and identifying identification features attached on a fuel element (10).

13. The charging machine (2) of any of claims 10 to 12, **characterized in that** the image processing module (46) is connected on the data side with a management module (56) for fuel elements.

## Revendications

1. Chargeuse (2) d'éléments de combustibles ayant un dispositif de levage (8) comprenant un poteau de guidage (12) et un preneur d'éléments de combustible (16) qui peut être sorti de manière télescopique du poteau de guidage (12), dans laquelle le preneur d'éléments de combustible (16) comprend à son bout inférieur un dispositif preneur (18), dans laquelle le poteau de guidage (12) est ancré à un chariot roulant (6) mobile dans un plan horizontal, dans laquelle une caméra vidéo (32) raccordée du côté des données à un poste de contrôle (34) et visant vers le bas est ménagée sur le preneur d'éléments de combustible (16), dans laquelle un endoscope (38) est ménagé au bout inférieur du preneur d'éléments de combustible (16), et dans laquelle la caméra vidéo (32) et l'endoscope (38) ainsi que des moyens d'illumination sont entourés par un tube de protection et de guidage (36), **caractérisée en ce que** le preneur d'éléments de combustible (16) est formé comme un preneur double avec un preneur de barres de commande (20) guidé dans son intérieur, et **en ce que** la caméra vidéo (32), l'endoscope (38) et les moyens d'illumination sont intégrés dans un tube intérieur (39) échangeable et fermé de manière étanche à l'eau, qui peut être inséré du haut dans le tube de protection et de guidage (36).

2. Chargeuse (2) selon la revendication 1, **caractérisée en ce que** le champ de vision de la caméra vidéo (32) couvre, au moins partiellement, une zone de prise comprenant le dispositif preneur (18).

3. Chargeuse (2) selon la revendication 1 ou 2, **caractérisée en ce que** la caméra vidéo (32) comprend une unité de convertisseur séparée spatialement d'un système optique, dans laquelle le système optique est ménagé au bout inférieur du preneur d'éléments de combustible (16) et l'unité de convertisseur est ménagée à une distance ci-dessus.

4. Chargeuse (2) selon la revendication 1, 2, ou 3, **caractérisée en ce que** l'endoscope (38) est formé comme un endoscope rigide avec un système de lentilles.

5. Chargeuse (2) selon l'une quelconque des revendications 1 à 4, **caractérisée en ce que** des moyens d'illumination sont fixés au dispositif de levage (8), en particulier au preneur d'éléments de combustible (16), pour illuminer une zone de prise comprenant le dispositif preneur (18).

6. Chargeuse (2) selon l'une quelconque des revendications 1 à 5, **caractérisée en ce que** le tube de protection et de guidage (36) est ménagé du côté extérieur du preneur d'éléments de combustible (16).

7. Chargeuse (2) selon l'une quelconque des revendications 1 à 6, **caractérisée en ce qu'**une cloche de centrage (14) formant un élément télescopique est prévue entre le tube de protection et de guidage (36) et le preneur d'éléments de combustible (16).

8. Chargeuse (2) selon l'une quelconque des revendications 1 à 7, **caractérisée en ce que** le poste de contrôle (34) comprend un monitor d'affichage (44) pour afficher les signaus vidéo transmis par la caméra vidéo (32).

9. Chargeuse (2) selon l'une quelconque des revendications 1 à 8, **caractérisée en ce que** le poste de contrôle (34) comprend un système de traitement de données (52).

10. Chargeuse (2) selon la revendication 9, **caractérisée en ce que** le système de traitement de données (52) est muni d'un module de traitement d'images (46).

11. Chargeuse (2) selon la revendication 10, **caractérisée en ce que** le module de traitement d'images (46) est raccordé, du côté de sortie de données, à un module de commande (50) commandant la position du chariot roulant (6) et/ou du pont de roulement (4).

12. Chargeuse (2) selon la revendication 10 ou 11, **caractérisée en ce que** le module de traitement d'images (46) comprend un module de reconnaissance de dessins (54) pour reconnaître et identifier des caractéristiques d'identification attachées à un élément de combustible (10).

13. Chargeuse (2) selon l'une quelconque des revendications 10 à 12, **caractérisée en ce que** le module de traitement d'images (46) est raccodé du côté de données à un module de gestion (56) pour des éléments de combustible.
